# EUROPEAN PATENT APPLICATION

(11) **EP 4 203 109 A1**
(43) Date of publication of application: **28.06.2023**
(21) Application number: 21858355.7
(22) Date of filing: 19.08.2021
(51) Int. Cl.: H01M 4/62, H01G 11/42, H01M 4/04, H01M 4/139

(54) **CONDUCTIVE CARBON, METHOD FOR PRODUCING SAME, METHOD FOR PRODUCING CONDUCTIVE CARBON MIXTURE CONTAINING SAID CONDUCTIVE CARBON, AND METHOD FOR PRODUCING ELECTRODE USING SAID CONDUCTIVE CARBON OR CONDUCTIVE CARBON MIXTURE**

(30) Priority: 21.08.2020 JP 2020140342
(71) Applicant: Nippon Chemi-Con Corporation, Tokyo 141-8605 (JP)
(72) Inventor: TATSUMI, Satoyuki, Tokyo 141-8605 (JP); MIYAMOTO, Noriyuki, Tokyo 141-8605 (JP); HORII, Daisuke, Tokyo 141-8605 (JP); KUBOTA, Satoshi, Tokyo 141-8605 (JP); YOSHIOKA, Kyohei, Tokyo 141-8605 (JP); TAKEDA, Sekihiro, Tokyo 141-8605 (JP)
(74) Representative: Staudt, Hans-Peter
(86) International application number: PCT/JP2021/030313
(87) International publication number: WO 2022/039211

(57) **Abstract**

The present invention provides a conductive carbon which enables the achievement of an electricity storage device that has high energy density, while exhibiting improved charge/discharge cycle stability even during high voltage application. A conductive carbon according to the present invention is produced by a method which comprises: an oxidation step wherein a carbon starting material is subjected to an oxidation treatment, thereby obtaining an oxidation-treated carbon that spreads in a paste-like state when a pressure is applied thereto; and a heat treatment step wherein the oxidation-treated carbon is subjected to a heat treatment under a vacuum or in a non-oxidizing atmosphere. Since CO₂ is separated from the oxidation-treated carbon during the heat treatment process, the amount of CO₂ generated from the thus-obtained conductive carbon in the temperature range of from 25 °C to 200 °C is smaller than the amount of CO₂ generated from the oxidation-treated carbon in the temperature range of from 25 °C to 200 °C. It is preferable that the heat treatment is carried out in such a manner that the amount of CO₂ generated from the thus-obtained conductive carbon in the temperature range of from 25 °C to 200 °C is within the range of from 0.015 % by mass to 0.050 % by mass of the entire conductive carbon.

## Description

### TECHNICAL FIELD

The present invention relates to a conductive carbon which enables the achievement of an electricity storage device that has high energy density, while exhibiting improved charge/discharge cycle stability even during high voltage application, a method of producing the conductive carbon and a method of producing an electrode for an energy storage device using the conductive carbon. The present invention also relates to a method of producing a conductive carbon mixture comprising the conductive carbon and a method of producing an electrode for an energy storage device using the conductive carbon mixture.

### THE RELATED ART

An energy storage device including a secondary battery, an electric double layer capacitor, a redox capacitor, and a hybrid capacitor is a device that has been considered for wide applications as a power source for an information device such as a cellphone and a laptop personal computer, a motor drive power source for a low-emission vehicle such as an electric vehicle and a hybrid vehicle, and an energy regeneration system. In such an energy storage device, an increase in energy density is desired in order to respond to a demand for higher performance and a smaller size.

In these energy storage devices, an electrode active material that develops capacitance through a Faraday reaction involving the exchange of electrons with ions in an electrolyte (including an electrolytic solution) or a non-Faraday reaction not involving the exchange of electrons is used for energy storage. The electrode active material is generally used in a form of composite material with a conductive agent. As the conductive agent, conductive carbons such as carbon black, natural graphite, artificial graphite, and carbon nanotubes are generally used. The conductive carbon is used concurrently with less conductive active material in order to serve to add conductivity to the composite material, act as a matrix that absorbs a volume change in accordance with a reaction of the active material, and also play a role to secure an electron conduction path even if the active material is mechanically damaged.

The composite material of active material and conductive carbon is generally produced by a method of mixing the active material particles and the conductive carbon. The conductive carbon principally does not contribute to an energy density of an energy storage device, so it is necessary to decrease the amount of conductive carbon per unit volume and increase the amount of active material in order to obtain an energy storage device with a high energy density. Therefore, studies have been conducted to increase the amount of active material per unit volume by improving the dispersion of conductive carbon or reducing the structure of conductive carbon and then closing the distance between the active material particles, but it was difficult to make the abovementioned conductive carbons efficiently advance between the active material particles, and therefore, it was difficult to increase the amount of active materials per unit volume by closing the distance between the active material particles.

In response to this problem, the applicant has proposed to use a conductive carbon that can be obtained by applying a strong oxidation treatment to a carbon raw material and that has the property of spreading like paste when pressurized for an electrode in an energy storage device (Patent Documents 1 to 15). "Like paste" means a state wherein no grain boundaries of primary carbon particles are observed, and non-particulate, irregularly shaped carbons are connected, in an SEM image taken at a magnification of 25,000x.

When pressure is applied to a conductive carbon such as carbon black, natural graphite, and carbon nanotubes, which has been used as a conductive agent in an electrode of a conventional energy storage device, the particle shape of carbon is maintained. However, when oxidation treatment is applied to the conductive carbon, the conductive carbon is oxidized from the surface of the particles, hydroxyl groups, carboxyl groups, carbonyl groups, and ether bonds, etc., are introduced into the carbon, conjugated double bonds of the carbon are oxidized to form carbon single bonds, and carbon-carbon bonds are partially broken. If the intensity of the oxidation treatment is further enhanced, the conductive carbon with the property of spreading like paste when pressurized can be obtained.

The conductive carbon with the property of spreading like paste when pressurized easily adheres to the surface of the electrode active material particles, and also is integrally compressed and spreads like paste when pressurized, making it difficult to disintegrate. Therefore, when the conductive carbon is mixed with electrode active material particles to obtain a mixture for an electrode of an energy storage device, the conductive carbon adheres to the surface of the active material particles and coats the surface during the mixing process and improves the dispersion of the active material particles. If the pressure applied to the conductive carbon during the production of the abovementioned mixture is high, at least part of the conductive carbon will spread like paste and partially coat the surface of the active material particles. Then, when an active material layer is formed with the mixture on a current collector of the electrode and pressure is applied to the active material layer, the abovementioned conductive carbon further spreads like paste and coats the surface of the electrode active material particles while densifying, the active material particles approach each other, and accordingly, the conductive carbon is extruded and packed densely not only into the gaps formed between adjacent active material particles but also into the pores existing on the surface of the active material particles (including the gaps between primary particles observed in secondary particles), while coating the surface of the active material particles. Therefore, the amount of electrode active material per unit volume in the electrode is increased and the electrode density is increased. In addition, the paste-like and densely packed conductive carbon has sufficient conductivity to serve as a conductive agent and does not inhibit the impregnation of the electrolytic solution in the energy storage devices. As a result, the energy density of the energy storage device is increased.

For example, Patent Document 6 shows the results of evaluating the content of hydrophilic portion in the abovementioned conductive carbon. The "hydrophilic portion" of the conductive carbon has the following meaning; when 0.1 g of the conductive carbon is added to 20 mL of an aqueous ammonia solution at pH 11, ultrasonic waves are irradiated for 1 minute, and the resulting solution is left for 5 hours to precipitate a solid phase portion, the portion that disperses without precipitation in the aqueous ammonia solution at pH 11 is the "hydrophilic portion." Also, the content of the hydrophilic portion in the total conductive carbon is determined by the following method. After precipitation of the solid phase portion, the remaining portion after removal of the supernatant liquid is dried, and the weight of the solid after drying is measured. The wight of the initial weight 0.1 g of the conductive carbon minus the weight of the solid after drying is the weight of the "hydrophilic portion" dispersed in the aqueous ammonia solution at pH 11. The ratio of the weight of the "hydrophilic portion" to the initial weight 0.1 g of the conductive carbon is the content of the "hydrophilic portion" in the conductive carbon.

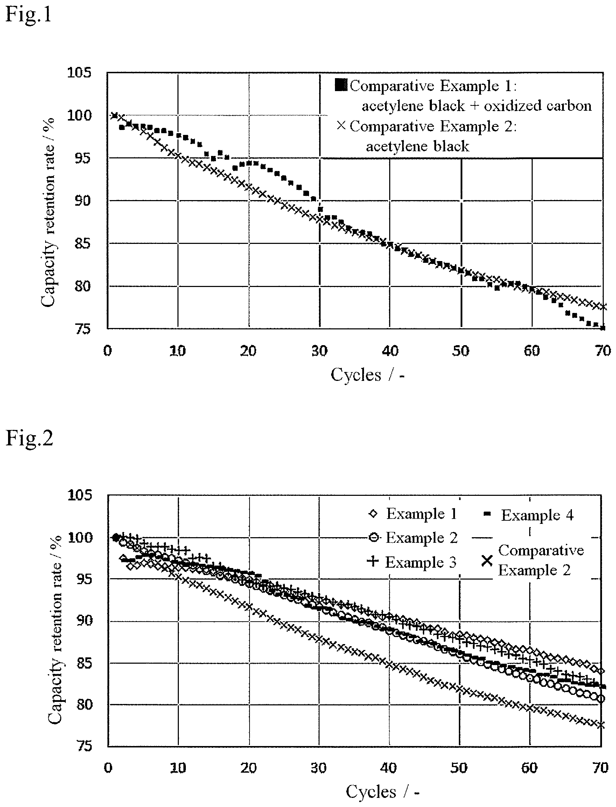

Patent Document 6 shows that, when the intensity of the oxidation treatment is increased so that the content of the hydrophilic portion exceeds 8 mass % of the total conductive carbon, the electrode density of the electrode produced using the resulting conductive carbon begins to increase; when the content of the hydrophilic portion exceeds 9 mass % of the total conductive carbon, the electrode density begins to increase rapidly; and when the hydrophilic portion exceeds 10% of the total conductive carbon, extremely high electrode density is obtained (see Figure 2 in this Patent Document). This increase in electrode density corresponds to the fact that the property of spreading like paste when pressurized is imparted to the conductive carbon as the intensity of the oxidation treatment is increased. Also, when a lithium-ion secondary battery with an positive electrode with acetylene black as the conductive carbon and the positive electrode active material and a lithium counter electrode, and a lithium-ion secondary battery wherein half or all of the acetylene black is replaced with the conductive carbon obtained from the abovementioned strong oxidation treatment are constituted, and their charge/discharge cycle stability is evaluated, the latter has been shown to exhibit better rate performance and charge/discharge cycle stability than the former (see Figures 6 to 11, 13, and 14 in this Patent Document). This improved charge/discharge cycle stability can be caused by the fact that the surface of the electrode active material is coated by the conductive carbon spreading like paste, which therefore suppresses the dissolution of the active material into the electrolytic solution (see Table 1 of this Patent Document).

### PRIOR ARTS DOCUMENTS

### PATENT DOCUMENTS

Patent Document 1: JP 2015-079678 A
Patent Document 2: JP 2015-079680 A
Patent Document 3: JP 2015-079681 A
Patent Document 4: WO 2015/056759 A1
Patent Document 5: WO 2015/056760 A1
Patent Document 6: WO 2015/133586 A1
Patent Document 7: JP 2015-181089 A
Patent Document 8: JP 2015-181090 A
Patent Document 9: JP 2016-001592 A
Patent Document 10: JP 2016-096125 A
Patent Document 11: JP 2019-019014 A
Patent Document 12: JP 2019-021420 A
Patent Document 13: JP 2019-021421 A
Patent Document 14: JP 2019-021427 A
Patent Document 15: JP 2019-200866 A

### NONPATENT DOCUMENTS

Non-patent Document 1: Carbon 37 (1999) 1379-1389

### SUMMARY OF THE INVENTION

### PLOBLEMS TO BE SOLVED BY THE INVENTION

As can be grasped from Figure 7 of the Patent Document 6, in a lithium-ion secondary battery having a positive electrode containing LiNi_{0.5}Mn_{0.3}Co_{0.2}O₂ as a positive electrode active material and acetylene black as a conductive carbon, 1M LiPF₆ ethylene carbonate/diethyl carbonate 1:1 solution as an electrolytic solution, and lithium as a counter electrode and a lithium-ion secondary battery with a positive electrode in which half of the acetylene black is replaced by a conductive carbon obtained by the abovementioned strong oxidation treatment, the latter shows better charge/discharge cycle stability than the former when the charge/discharge cycles are repeated in the range of 4.6 to 3.0 V under the conditions of 60 °C and 0.5 C charge/discharge rate. However, lithium is used as the counter electrode in this evaluation, which means that it is an evaluation of semi-batteries. Therefore, in order to evaluate performance as a practical lithium-ion secondary battery, as detailed below, a battery with a positive electrode containing LiNi_{0.5}Mn_{0.3}Co_{0.2}O₂ as a positive electrode active material and a conductive carbon, an electrolytic solution wherein 1M LiPF₆ and 1wt% vinylene carbonate as an additive are dissolved in an ethylene carbonate/dimethyl carbonate 1:1 mixed solvent, and a negative electrode containing graphite was constituted, and a charge/discharge cycle test was conducted in the range of 4.5 V to 2.5 V under the conditions of 45 °C and 0.6 C charge/discharge rate. In a typical lithium-ion secondary battery using the above positive active material, the upper cutoff value is generally set at approximately 4.2 V; however, given the recent demand for high energy density in lithium-ion secondary batteries, the upper cutoff value was set at 4.5 V, which is higher than the typical value and the charge/discharge cycle performance was evaluated in the test.

Figure 1 shows the results of the charge/discharge cycle test. The conductive carbon that is used to produce the positive electrode of the battery in Comparative Example 2 is acetylene black, and in producing the positive electrode of the battery in Comparative Example 1, half of the acetylene black is replaced by the conductive carbon obtained by the abovementioned strong oxidation process. As is obvious from Figure 1, the battery in Comparative Example 1 had a higher capacity retention rate than the battery in Comparative Example 2 up to 25 charge/discharge cycles, but after about 30 charge/discharge cycles, the capacity retention rate of the battery in Comparative Example 1 became equivalent to the capacity retention rate of the battery in Comparative Example 2, and after about 60 charge/discharge cycles, the capacity retention rate of the battery in Comparative Example 1 was rather lower than that of the battery in Comparative Example 2. Therefore, although an energy storage device with high energy density can be obtained by constituting an electrode using a conductive carbon with the property of spreading like paste when pressurized that is obtained by the strong oxidation treatment, in order to provide a practical energy storage device, it is desirable to improve the electrode so that it can show stable charge/discharge cycle characteristics even when high voltage is applied.

Therefore, the purpose of the present invention is to provide a conductive carbon leading to an energy storage device with high energy density and improved charge/discharge cycle stability even when high voltage is applied, and its producing method.

### MEANS FOR SOLVING PROBLEMS

The inventors assumed that the lower capacity retention of the lithium-ion secondary battery in Comparative Example 1 resulted from the leakage current that can occur in a positive electrode when high voltage is applied. If the leakage current occurs in the positive electrode, an SEI film will be formed on the surface of the graphite of the negative electrode under the influence of this leakage current, so the capacity of the battery will be lowered. Also, it is expected that the leakage current in the positive electrode is more likely to occur when there are more substituents on the surface of the conductive carbon.

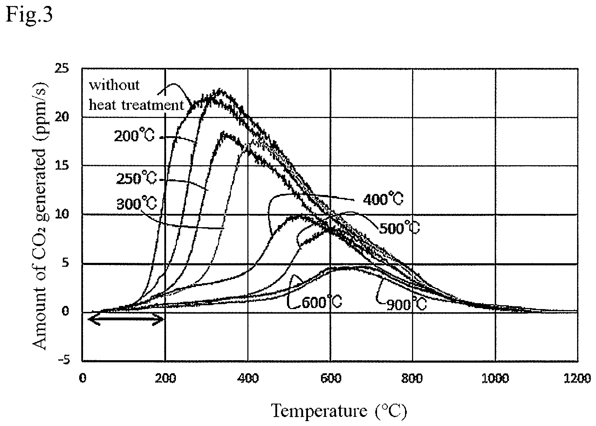

The inventors then tried to reduce the substituents on the surface of the conductive carbon that was used in the positive electrode of the battery in Comparative Example 1 by heat treating the conductive carbon in a nitrogen atmosphere at temperatures ranging from 200 to 900 °C. Next, when a positive electrode was constituted by using the conductive carbon obtained by heat treatment and a battery equipped with this positive electrode was evaluated, it was found that even the conductive carbon that was heat treated at 200 °C gave improved capacity retention rate in a charge/discharge cycle test when high voltage was applied (see Figure 2). Furthermore, the inventors investigated changes in the amount of surface substituents in the conductive carbon that gives improved capacity retention rate by using a thermal programmed desorption gas photoionization mass spectrometry (TPD-PIMS) device (see Figure 3). As a result, it was found that the amount of CO₂ generation from the conductive carbon in the range of 25 to 200 °C varied significantly even by the heat treatment at 200 °C. It is known that CO₂ generation from a carbon in the range of 25 to 200 °C is mainly due to desorption from the surface carboxyl groups (see Non-patent Document 1), but this desorption from the surface carboxyl groups almost finished in the heat treatment at 250 °C. In consideration of these results, it was found that identification of a conductive carbon focusing on the amount of CO₂ generation in the range of 25 to 200 °C would be useful in order to obtain improved charge/discharge cycle stability when high voltage was applied.

Therefore, the present invention relates to a method for producing a conductive carbon to be used as a conductive agent in an electrode of a storage device, comprising:
an oxidation step, wherein a carbon raw material is subjected to oxidation treatment to obtain an oxidized carbon having a property of spreading like paste when pressurized; and
a heat treatment step, wherein the oxidized carbon is subjected to heat treatment in a vacuum or a non-oxidizing atmosphere to make an amount of CO₂ generated from a resulting conductive carbon in the range of 25 to 200 °C less than an amount of CO₂ generated from the oxidized carbon in the range of 25 to 200 °C.

The "amount of CO₂ generated from a carbon in the range of 25 to 200 °C" has the following meaning. An experiment is carried out to measure the amount of CO₂ generated while heating 30 mg of a carbon to be measured in a TPD-PIMS device under a helium atmosphere at atmospheric pressure (helium flow rate: 300 mL per minute), in the temperature range of room temperature to 1200 °C, and at a temperature increase rate of 20 °C per minute. The total amount of CO₂ generated from the carbon in the temperature range of 25 to 200 °C (an integral value) derived from the obtained experimental result is the "amount of CO₂ generated from carbon in the range of 25 to 200 °C."

In the oxidation step, it is preferable to conduct the oxidation treatment so that the content of a hydrophilic portion in the resulting oxidized carbon is at least 10 mass % of the total oxidized carbon because this will significantly enhance the property in the oxidized carbon of spreading like paste when pressurized.

Also, in the heat treatment step, it is desirable if the heat treatment is conducted in a manner that the amount of CO₂ generated from the resulting conductive carbon in the range of 25 to 200 °C is in the range of 0.015 to 0.050 mass % of the total conductive carbon, because the charge/discharge cycle stability when high voltage is applied is especially improved. Therefore, the present invention also relates to a conductive carbon to be used as a conductive agent in an electrode of an energy storage device which can be produced through the abovementioned heat treatment step, wherein the conductive carbon has a property of spreading like paste when pressurized, and an amount of CO₂ generated from the conductive carbon in the range of 25 to 200 °C is within the range of 0.015 to 0.050 mass % of the entire conductive carbon.

The oxidized carbon obtained in the oxidation step can be used as a conductive agent in the form of a conductive carbon mixture that is mixed with a different conductive carbon having a conductivity higher than that of the oxidized carbon. It has been found that the conductivity of the electrode is further improved when the conductive carbon mixture is used (see Patent Document 10). To obtain the conductive carbon mixture, it is convenient to conduct heat treatment after the oxidized carbon and the different conductive carbon are mixed. Therefore, the present invention relates to a method of producing a conductive carbon mixture to be used as a conductive agent in an electrode of an electric storage device, comprising:
an oxidation step, wherein a carbon raw material is subjected to oxidation treatment to obtain an oxidized carbon having a property of spreading like paste when pressurized,
a mixing step, wherein the oxidized carbon is mixed with a different conductive carbon having a conductivity higher than that of the oxidized carbon to obtain a preliminary carbon mixture in which at least a part of the oxidized carbon spreads like paste to coat a surface of the different conductive carbon, and
a heat treatment step, wherein the preliminary carbon mixture is subjected to heat treatment in a vacuum or in a non-oxidizing atmosphere to make an amount of CO₂ generated from a resulting conductive carbon mixture in the range of 25 to 200 °C less than an amount of CO₂ generated from the preliminary carbon mixture in the range of 25 to 200 °C. It is preferable that the oxidation treatment in the oxidation step is performed so that a hydrophilic portion in the oxidized carbon obtained is 10 or more mass % of the total oxidized carbon.

The pressure applied to the oxidized carbon during the mixing step causes at least a part of the oxidized carbon to spread like paste, and this paste-like form is maintained after the heat treatment step. Out of the conductive carbon mixture obtained through the heat treatment step, the portion derived from the oxidized carbon is referred to herein as a "carbon derived from the oxidized carbon."

By using the conductive carbon or the conductive carbon mixture produced by the producing method of the present invention to constitute an electrode of an energy storage device, an energy storage device with high energy density and improved charge/discharge cycle stability even when high voltage is applied can be obtained.

Therefore, the present invention relates to a method of producing an electrode for an energy storage device, comprising:
a mixing process, wherein electrode active material particles and the conductive carbon obtained by the abovementioned method for a conductive carbon are mixed to obtain a mixture for an electrode in which at least a part of the conductive carbon spreads like paste to coat a surface of the electrode active material particles, and
a pressurizing process, wherein an active material layer is formed by applying the mixture for an electrode onto a current collector for the electrode, and pressure is applied to the active material layer obtained to further spread like paste and densify the conductive carbon.

The present invention further relates to a method of producing an electrode for an energy storage device, comprising:
a mixing process, wherein electrode active material particles and the conductive carbon mixture obtained by the abovementioned method for a conductive carbon mixture are mixed to obtain a mixture for an electrode in which a carbon that is derived from the oxidized carbon and at least a part of which spreads like paste coats not only a surface of the different conductive carbon but also a surface of the electrode active material particles, and
a pressurizing process, wherein an active material layer is formed by applying the mixture for an electrode onto a current collector for the electrode, and pressure is applied to the active material layer obtained to further spread like paste and densify the carbon which is derived from the oxidized carbon and at least a part of which spreads like paste.

### ADVANTAGEOUS EFFECTS OF THE INVENTION

The conductive carbon obtained by the present invention easily adheres to the surface of active material particles, and has a property of being compressed integrally and spreading like paste when pressure is applied. Therefore, in producing an electrode for an energy storage device, when pressure is applied to a mixture containing active material particles and the conductive carbon, the pressure causes the conductive carbon to spread like paste and densify while covering the surface of the active material particles, and the energy density of the electrode storage device is improved. Also, an energy storage device with an electrode comprising the conductive carbon obtained by the present invention exhibits improved charge/discharge cycle stability even when high voltage is applied.

### BRIEF DESCRIPTION OF THE DRAWINGS

Figure 1 shows the results of charge/discharge cycle stability tests on a lithium-ion secondary battery with a positive electrode using acetylene black as a conductive agent, and on a lithium-ion secondary battery with a positive electrode using a mixture as a conductive agent where half of the acetylene black is replaced by an oxidized carbon.
Figure 2 shows the results of charge/discharge cycle stability tests on a lithium-ion secondary battery with a positive electrode using acetylene black as a conductive agent, and on a lithium-ion secondary battery with a positive electrode using a mixture as a conductive agent where half of the acetylene black is replaced by a conductive carbon obtained by heat treating an oxidized carbon.
Figure 3 shows the results of measuring the amount of CO₂ generated from a preliminary carbon mixture or a conductive carbon mixture obtained by heat treating the preliminary carbon mixture by using a TPD-PIMS device.

### DETAILED DESCRIPTION OF THE INVENTION

### (I) Conductive carbon and its production method

A conductive carbon for an electrode of an energy storage device of the present invention can be manufactured by a method comprising:
an oxidation step, wherein a carbon raw material is subjected to oxidation treatment to obtain an oxidized carbon having a property of spreading like paste when pressurized; and
a heat treatment step, wherein the oxidized carbon is subjected to heat treatment in a vacuum or a non-oxidizing atmosphere to make an amount of CO₂ generated from a resulting conductive carbon in the range of 25 to 200 °C less than an amount of CO₂ generated from the oxidized carbon in the range of 25 to 200 °C. Each step is detailed below.

### (I-1) Oxidation step

In the oxidation step, a conductive carbon raw material is subjected to a relatively strong oxidation treatment. For the carbon raw material used, carbon blacks such as Ketjen black, acetylene black, furnace black, and channel black, fullerenes, carbon nanotubes, carbon nanofibers, graphene, amorphous carbon, carbon fiber, natural graphite, artificial graphite, graphitized Ketjen black, mesoporous carbon, vapor-phase carbon fiber, and other conductive carbons that are used as a conductive agent for an electrode of a conventional energy storage device can be used without limitation, but with respect to ease of oxidation, a conductive carbon with an inner vacancy such as porous carbon powder, Ketjen black, furnace black with an inner vacancy, carbon nanofiber, and carbon nanotube is preferred, and among them, a conductive carbon with an inner vacancy having a specific surface area of 300 m²/g or more as measured by the BET method is preferred, and especially, a spherical conductive carbon such as Ketjen black and furnace black with an inner vacancy is preferred.

As the oxidation treatment of the carbon raw material, a known oxidation method can be used without limitation. For example, the oxidized carbon can be obtained by treating the carbon raw material in an acid or hydrogen peroxide solution. As acid, nitric acid, nitric acid-sulfuric acid mixtures, hypochlorous acid solutions, etc. can be used. Also, the oxidized carbon can be obtained by heating the carbon raw material in an oxygen-containing atmosphere, steam, or carbon dioxide. Further, the oxidized carbon can be obtained by mixing the carbon raw material with an alkali metal hydroxide, heating the mixture in an oxygen-containing atmosphere, and removing the alkali metal by washing with water or other methods. Furthermore, the oxidized carbon can be obtained by plasma treatment, UV irradiation, corona discharge or glow discharge treatment in an oxygen-containing atmosphere, treatment with ozone water or ozone gas, or oxygen bubbling treatment in water, of the carbon raw material.

When the carbon raw material, preferably the carbon raw material with an inner vacancy, is subjected to oxidation treatment, the carbon particle is oxidized from the surface, hydroxyl groups, carboxyl groups, and ether bonds are introduced into the carbon, conjugated double bonds in the carbon are oxidized to form carbon single bonds, carbon-carbon bonds are partially broken, and a portion having high hydrophilicity is generated on the particle surface. As the intensity of the oxidation treatment is increased, the proportion of the hydrophilic portion in the carbon particle increases, and the oxidized carbon with a property of spreading like paste when pressurized can be obtained. The proportion of the hydrophilic portion in the oxidized carbon is preferably 10% or more by mass of the total oxidized carbon. Such oxidation-treated carbon tends to spread like paste and integrally densify when pressure is applied.

The oxidized carbon having a hydrophilic portion of at least 10 mass % of the total is suitably obtained by a first production method comprising:
(a1) a process of treating a carbon raw material having an inner vacancy with acid,
(b1) a process of mixing the acid-treated product and a transition metal compound,
(c1) a process of pulverizing the resulting mixture to cause a mechanochemical reaction,
(d1) a process of heating the product after mechanochemical reaction in a non-oxidizing atmosphere, and
(e1) a process of removing the transition metal compound and/or its reaction product from the product after heating.

In the process (a1), the carbon raw material with an inner vacancy is immersed in acid and left to stand. Ultrasonic waves may be applied during this immersion. As acid, nitric acid, a nitric acid-sulfuric acid mixture, a hypochlorous acid solution, and other acids that are normally used in the oxidation treatment of carbon can be used. The immersion time depends on the concentration of the acid and the amount of the carbon raw material to be treated but is generally within the range from 5 minutes to 5 hours. After the acid-treated carbon is thoroughly washed and dried, it is mixed with a transition metal compound in the process (b1).

As the transition metal compound added to the carbon raw material in the process (b1), inorganic metal salts such as halide, nitrate, sulfate, and carbonate of the transition metal, organometallic salts such as formate, acetate, oxalic salt, methoxide, ethoxide, isopropoxide of the transition metal, or mixtures thereof can be used. These compounds can be used alone or in a mixture of two or more. The compounds containing a different transition metal can be mixed in a given amount. A compound other than the transition metal compound, such as an alkali metal compound, can be added together as long as it does not adversely affect the reaction. Since the conductive carbon produced in the present invention is mixed with active material particles in the production of an electrode for an energy storage device, it is preferable to add a compound of an element that constitutes an active material to the carbon raw material to prevent contamination of elements that may become impurities against the active material.

In the process (c1), the mixture obtained in the process (b1) is pulverized to produce a mechanochemical reaction. Examples of pulverizers for this reaction include a mortar mill, ball mill, bead mill, rod mill, roller mill, stirred mill, planetary mill, vibrating mill, hybridizer, mechanochemical complexing equipment and jet mill. There are no strict limits on the grinding time as it depends on the pulverizer used and the amount of carbon to be processed, but it is generally within the range from 5 minutes to 3 hours. The process (d1) is performed in a non-oxidizing atmosphere such as a nitrogen or argon atmosphere. The heating temperature and heating time are appropriately selected according to the transition metal compound used. In the following process (e1), the transition metal compound and/or its reaction product are removed from the product after heating by dissolving them with acid or other methods, followed by sufficient washing and drying to obtain an oxidized carbon.

In the first production method, in the process (c1), the transition metal compound acts to promote oxidation of the carbon raw material through the mechanochemical reaction, and the oxidation of the carbon raw material proceeds rapidly. This oxidation produces the oxidized carbon having a hydrophilic portion of at least 10 mass % of the total.

The oxidized carbon having a hydrophilic portion of at least 10 mass % of the total is also suitably obtained by a second production method comprising:
(a2) a process of mixing a carbon raw material with an inner vacancy with a transition metal compound,
(b2) a process of heating the resulting mixture in an oxidizing atmosphere, and
(c2) a process of removing the transition metal compound and/or its reaction product from the product after heating.

As the transition metal compound added to the carbon raw material in the process (a2), inorganic metal salts such as halide, nitrate, sulfate, and carbonate of the transition metal, organometallic salts such as formate, acetate, oxalic salt, methoxide, ethoxide, isopropoxide of the transition metal, or mixtures thereof can be used. These compounds can be used alone or in a mixture of two or more. The compounds containing a different transition metal can be mixed in a given amount. A compound other than the transition metal compound, such as an alkali metal compound, can be added together as long as it does not adversely affect the reaction. Since the conductive carbon produced in the present invention is mixed with active material particles in the production of an electrode for an energy storage device, it is preferable to add a compound of an element that constitutes an active material to the carbon raw material to prevent contamination of elements that may become impurities against the active material.

The process (b2) is performed in an oxygen-containing atmosphere, for example, air, at a temperature at which carbon is partially but not completely lost, preferably at 200 to 350 °C. In the following process (c2), the transition metal compound and/or its reaction product are removed from the product after heating by dissolving them with acid or other methods, followed by thorough washing and drying to obtain an oxidized carbon.

In the second production method, the transition metal compound acts as a catalyst to oxidize the carbon raw material in the heating process in an oxidizing atmosphere, resulting in rapid oxidation of the carbon raw material. This oxidation produces the oxidized carbon having a hydrophilic portion of at least 10 mass % of the total.

The suitable oxidized carbon having a hydrophilic portion of at least 10 mass % of the total can be obtained by applying a strong oxidation treatment to the carbon raw material, and it is also possible to promote oxidation of the carbon raw material by a method other than the first and second production methods.

### (1-2) Heat treatment step

In the heat treatment step, the oxidized carbon obtained in the abovementioned oxidation step is subjected to heat treatment in a vacuum or in a non-oxidizing atmosphere. The non-oxidizing atmosphere can be composed of inert gas such as nitrogen and argon, reducing gas such as hydrogen and carbon monoxide, or a mixture of inert and reducing gases. In the step of heat treatment, CO₂ mainly due to carboxyl groups is desorbed from the surface of the oxidized carbon, and the amount of CO₂ generated from the resulting conductive carbon in the range of 25 to 200 °C is made less than the amount of CO₂ generated from the oxidized carbon in the range of 25 to 200 °C.

The temperature and time of heat treatment change depending on the conditions such as the amount of the oxidized carbon to be treated and the type of heat treatment atmosphere. For example, if the heat treatment atmosphere is a nitrogen atmosphere, treatment conditions of 2 to 8 hours at a temperature between 200 °C and 500 °C, or 0.5 to 2 hours at a temperature between 500 °C and 900 °C can be adopted.

It is preferable to conduct the heat treatment in a manner that the amount of CO₂ in the range of 25 to 200 °C generated from the conductive carbon that is obtained after the treatment is in the range of 0.015 to 0.050 mass % of the total conductive carbon, because this especially improves the charge/discharge cycle stability when high voltage is applied.

### (II) Conductive carbon mixture and its production method

The oxidized carbon obtained in the abovementioned oxidation step can be used as a conductive agent in the form of a conductive carbon mixture mixed with a different conductive carbon that has a higher conductivity than that of the oxidized carbon. The conductive carbon mixture can be suitably obtained by a method comprising:
an oxidation step, wherein a carbon raw material is subjected to oxidation treatment to obtain an oxidized carbon having a property of spreading like paste when pressurized,
a mixing step, wherein the oxidized carbon is mixed with a different conductive carbon having a conductivity higher than that of the oxidized carbon to obtain a preliminary carbon mixture in which at least a part of the oxidized carbon spreads like paste to coat a surface of the different conductive carbon, and
a heat treatment step, wherein the preliminary carbon mixture is subjected to heat treatment in a vacuum or in a non-oxidizing atmosphere to make the amount of CO₂ generated from a resulting conductive carbon mixture in the range of 25 to 200 °C less than the amount of CO₂ generated from the preliminary carbon mixture in the range of 25 to 200 °C. Each step is described below.

### (II-1) Oxidation step

Regarding the oxidation step, the description of the (I-1) oxidation step for producing the conductive carbon is directly applicable, so further explanation is omitted.

### (II-2) Mixing step

In the mixing step, the oxidized carbon obtained in the oxidation step is mixed with a different conductive carbon having a higher conductivity than that of the oxidized carbon to obtain a preliminary carbon mixture.

Examples for the different conductive carbon are carbon blacks such as Ketjen black, acetylene black, furnace black, and channel black, fullerene, carbon nanotube, carbon nanofiber, graphene, amorphous carbon, carbon fiber, natural graphite, artificial graphite, graphitized Ketjen black, mesoporous carbon, vapor-phase carbon fiber, and other conductive carbons that are used as a conductive agent for an electrode of a conventional energy storage device. The mass ratio of the oxidized carbon and the different conductive carbon is generally within the range of 3:1 to 1:3.

There is no limitation to the mixing methods for conducting the mixing step and known mixing methods can be used, but it is preferable to mix by dry mixing. For dry mixing, a mortar mill, ball mill, bead mill, rod mill, roller mill, agitator mill, planetary mill, vibrating mill, hybridizer, mechanochemical compounding equipment, and jet mill can be used. The mixing time changes depending on the total amount of the oxidized carbon and the different conductive carbon to be mixed and the mixing device to be used, but generally, it is within the range from 10 minutes to 1 hour.

Since the oxidized carbon has the property of spreading like paste when pressurized, the pressure applied to the oxidized carbon during the mixing step causes at least a part of the oxidized carbon to spread like paste to cover the surface of the different conductive carbon.

### (II-3) Heat treatment step

Regarding the heat treatment step, the description of the (I-2) heat treatment step for producing the conductive carbon is applicable except that the preliminary carbon mixture is heat treated instead of the oxidized carbon, so further explanation is omitted. The form of the oxidized carbon contained in the preliminary carbon mixture that spreads like paste is maintained in the carbon derived from the oxidized carbon in the conductive carbon mixture obtained after heat treatment.

A suitable method of conducting heat treatment after obtaining the preliminary carbon mixture has been described above, but it is also possible to heat treat the oxidized carbon and then mix it with the different conductive carbon, or to heat treat the oxidized carbon and then mix it with the different conductive carbon and then to conduct an additional heat treatment to the mixture.

### (III) Method of producing electrode

The conductive carbon and the conductive carbon mixture obtained by the production methods described above are used for an electrode of an energy storage device such as secondary battery, electric double layer capacitor, redox capacitor, and hybrid capacitor in a form mixed with particles of electrode active material that develops capacitance through a Faraday reaction involving the transfer of electrons to and from ions in an electrolyte of the storage device, or through a non-Faraday reaction that does not involve the transfer of electrons. The energy storage device comprises a pair of electrodes (positive and negative electrodes) and an electrolyte disposed between them as essential elements. At least one of the positive and negative electrodes is manufactured using a mixture comprising the conductive carbon or the conductive carbon mixture obtained by the methods described above and the electrode active material particles. The resulting energy storage device has high energy density and improved charge/discharge cycle stability even when high voltage is applied.

The electrolyte disposed between the positive and negative electrodes in the energy storage device may be an electrolytic solution held by a separator, a solid electrolyte, or a gel electrolyte, and any electrolyte used in conventional energy storage devices can be used without particular limitations. The following are examples of typical electrolytes. For a lithium-ion secondary battery, an electrolyte made by dissolving a lithium salt such as LiPF₆, LiBF₄, LiCF₃SO₃, and LiN(CF₃SO₂)₂ in a solvent such as ethylene carbonate, propylene carbonate, butylene carbonate, dimethyl carbonate is used while held by a separator such as polyolefin fiber nonwoven fabric, glass fiber nonwoven fabric. In addition, an inorganic solid electrolyte such as Li₅La₃Nb₂O₁₂, Li_{1.5}Al_{0.5}Ti_{1.5}(PO₄)₃, Li₇La₃Zr₂O₁₂, and Li₇P₃S₁₁, an organic solid electrolyte composed of a composite of a lithium salt and a polymer compound such as polyethylene oxide, polymethacrylate and polyacrylate, and a gel-like electrolyte wherein an electrolytic solution is absorbed by polyvinylidene fluoride, polyacrylonitrile, etc. are also used. For an electric double layer capacitor and redox capacitor, an electrolytic solution wherein a quaternary ammonium salt such as (C₂H₅)₄NBF₄ is dissolved in a solvent such as acrylonitrile and propylene carbonate is used. For a hybrid capacitor, an electrolytic solution wherein a lithium salt is dissolved in propylene carbonate, etc., or an electrolytic solution wherein a quaternary ammonium salt is dissolved in propylene carbonate, etc., is used.

A positive or negative electrode of an energy storage device using the conductive carbon manufactured by the method described above is generally manufactured by a method comprising:
a mixing process, wherein electrode active material particles and the conductive carbon obtained are mixed together, if necessary, with a solvent in which a binder is dissolved to obtain a mixture for an electrode in which at least a part of the conductive carbon spreads like paste to coat a surface of the electrode active material particles, and
a pressurizing process, wherein an active material layer is formed by applying the mixture for an electrode onto a current collector for the electrode, and pressure is applied to the active material layer obtained to further spread like paste and densify the conductive carbon.

As the conductive carbon adheres to the surface of the active material particles and coat the surface in the mixing process, thus agglomeration of the active material particles can be inhibited. Also, if the pressure applied to the conductive carbon in the mixing process is large, at least a part of the conductive carbon spreads like paste and partially covers the surface of the active material particles. Further, pressure applied to the active material layer in the pressurizing process causes the conductive carbon to further spread like paste and densify while covering the surface of the active material particles, the active material particles approach each other, and accordingly, the conductive carbon coats the surface of the active material particles and is pushed out not only into the gaps formed between adjacent active material particles but also into the interior of the pores on the surface of the active material particles to fill them densely. As a result, the amount of the active material per unit volume in the electrode increases and the electrode density increases. The paste-like and densely packed conductive carbon is conductive enough to function as a conductive agent and does not inhibit the impregnation of the electrolytic solution in the energy storage device. These lead to an increase in the energy density of the energy storage device. Furthermore, since the conductive carbon is heat-treated, the energy storage device has improved charge/discharge cycle stability even when high voltage is applied.

If an improvement of the conductivity of an electrode is particularly desired, the conductivity of the electrode is further improved by using the conductive carbon mixture produced by the abovementioned method instead of the conductive carbon. The positive or negative electrode of the energy storage device using the conductive carbon mixture is generally produced by a method comprising:
a mixing process, wherein electrode active material particles and the conductive carbon mixture are mixed together, if necessary, with a solvent in which a binder is dissolved to obtain a mixture for an electrode in which a carbon that is derived from the oxidized carbon and at least a part of which spreads like paste coats not only a surface of the different conductive carbon but also a surface of the electrode active material particles, and
a pressurizing process, wherein an active material layer is formed by applying the mixture for an electrode onto a current collector for the electrode, and pressure is applied to the active material layer obtained to further spread like paste and densify the carbon which is derived from the oxidized carbon and at least a part of which spreads like paste.

In this embodiment, the carbon derived from the oxidized carbon and at least partially spreading like paste adheres not only to the surface of the different conductive carbon but also to the surface of the electrode active material particles and covers the surfaces in the mixing process, thereby successfully suppressing agglomeration of the electrode active material particles. Furthermore, the pressure applied to the active material layer formed on the current collector in the pressurizing process causes the carbon derived from the oxidized carbon and at least partially spreading like paste to densely fill the gap formed by the adjacent electrode active material particles together with the different conductive carbon, thereby improving the conductivity of the whole electrode and further improving the energy density of the energy storage device. In addition, the conductive carbon mixture is heat treated, so the energy storage device has improved charge/discharge cycle stability even when high voltage is applied.

For the positive or negative active material mixed with the conductive carbon or the conductive carbon mixture in the mixing process, an electrode active material used in conventional energy storage devices can be used without particular limitations. The active material can be a single compound or a mixture of two or more kinds of compounds.

Examples of the positive electrode active material for a secondary battery are, first of all, layered rock salt type LiMO₂, layered Li₂MnO₃-LiMO₂ solid solution, and spinel type LiM₂O₄ (M in the formula means Mn, Fe, Co, Ni or a combination thereof). Specific examples of these are LiCoO₂, LiNiO₂, LiNi_{4/5}Co_{1/5}O₂, LiNi_{1/3}Co_{1/3}Mn_{1/3}O₂, LiNi_{1/2}Mn_{1/2}O₂, LiFeO₂, LiMnO₂, Li₂MnO₃-LiCoO₂, Li₂MnO₃-LiNiO₂, Li₂MnO₃-LiNi_{1/3}Co_{1/3}Mn_{1/3}O₂, Li₂MnO₃-LiNi_{1/2}Mn_{1/2}O₂, Li₂MnO₃-LiNi_{1/2}Mn_{1/2}O₂-LiNi_{1/3}Co_{1/3}Mn_{1/3}O₂, LiMn₂O₄, LiMn_{3/2}Ni_{1/2}O₄. Also, sulfur and sulfides such as Li₂S, TiS₂, MoS₂, FeS₂, VS₂, and Cr_{1/2}V_{1/2}S₂, selenides such as NbSe₃, VSe₂, and NbSe₃, oxides such as Cr₂O₅, Cr₃O₈, VO₂, V₃O₈, V₂O₅, and V₆O₁₃, and composite oxides such as LiNi_{0.8}Co_{0.15}Al_{0.05}O₂, LiVOPO₄, LiV₃O₅, LiV₃O₈, MoV₂O₈, Li₂FeSiO₄, Li₂MnSiO₄, LiFePO₄, LiFe_{1/2}Mn_{1/2}PO₄, LiMnPO₄, and Li₃V₂(PO₄)₃ are exemplified.

Examples of the negative electrode active material for a secondary battery are oxides such as Fe₂O₃, MnO, MnO₂, Mn₂O₃, Mn₃O₄, CoO, Co₃O₄, NiO, Ni₂O₃, TiO, TiO₂, SnO, SnO₂, SiO₂, RuO₂, WO, WO₂, and ZnO, metals such as Sn, Si, Al, and Zn, composite oxides such as LiVO₂, Li₃VO₄, and Li₄Ti₅O₁₂, and nitrides such as Li_{2.6}Co_{0.4}N, Ge₃N₄, Zn₃N₂, and Cu₃N.

Examples of the active material in a polarizable electrode of an electric double-layer capacitor includes activated carbon with a large specific surface area, carbon nanofiber, carbon nanotube, phenolic resin carbide, polyvinylidene chloride carbide, microcrystalline carbon, and other carbon materials. In a hybrid capacitor, the positive active material illustrated for the secondary battery can be used for the positive electrode, in which case the negative electrode is composed of a polarizable electrode using an activated carbon, etc. Also, the negative electrode active material illustrated for the secondary battery can be used for the negative electrode, in which case the positive electrode is composed of a polarizable electrode using an activated carbon, etc. Examples of the positive electrode active material for the redox capacitor are metal oxides such as RuO₂, MnO₂, and NiO, and while the negative electrode is composed of an active material such as RuO₂ and a polarizable material such as an activated carbon.

There is no limitation on the shape or particle size of the active material particles, but the average particle size is preferably greater than 2 µm and 25 µm or less. The active material particles with such relatively large particle diameter improve electrode density by themselves, and due to the pressing force of the active material particles, promote the gelatinization of the conductive carbon or the carbon derived from the oxidized carbon in the conductive carbon mixture in the mixing process. Also, in the process of applying pressure to the active material layer on the current collector during the electrode production, such active material particles with relatively large particle diameter further press the partially paste-like conductive carbon or the partially paste-like carbon derived from the oxidized carbon, to further spread like paste and density the conductive carbon or the carbon derived from the oxidized carbon. As a result, the electrode density is further increased, and the energy density of the energy storage device is further improved.

It is also preferable that the active material particles are composed of micro particles having an average particle size of 0.01 to 2 µm and coarse particles having an average particle size greater than 2 µm and 25 µm or less that can act as active material in the same electrode as the micro particles. In the mixing process, the conductive carbon or the carbon derived from the oxidized carbon adheres to and covers the surface of not only the surface of the small particles but also the surface of the coarse particles, thereby suppressing agglomeration of the active material particles and making the mixing state of the active material particles and the conductive carbon or the conductive carbon mixture uniform. Also, as described above, the coarse particles promote gelatinization and densification of the conductive carbon or the carbon derived from the oxidized carbon, increase the electrode density and improve the energy density of the energy storage device. Furthermore, the pressure applied to the active material layer formed on the current collector by the rolling process during the electrode production causes the micro particles to push the conductive carbon or the conductive carbon mixture and fill into the gaps formed between adjacent coarse particles together with them, so the electrode density is further increased and the energy density of the storage device is further improved.

There is no limitation to the mixing method for carrying out the mixing process, and known mixing methods can be used. However, it is preferable to mix the active material particles and the conductive carbon or the conductive carbon mixture by dry mixing, followed by mixing with a solvent in which the binder is dissolved, if necessary. For dry mixing, a mortar mill, ball mill, bead mill, rod mill, roller mill, agitator mill, planetary mill, vibrating mill, hybridizer, mechanochemical compounding device and jet mill can be used. In order to obtain an energy storage device with high energy density, the ratio of the active material particles to the conductive carbon or the conductive carbon mixture is preferably in the range of 90:10 to 99.5:0.5 by mass, and more preferably, in the range of 95:5 to 99:1 by mass. If the ratio of the conductive carbon or the conductive carbon mixture is less than the abovementioned range, the conductivity of the active material layer is less than sufficient and the coverage rate of the active material particles by the conductive carbon or the conductive carbon mixture tends to decrease. Also, if the ratio of the conductive carbon or the conductive carbon mixture is greater than the abovementioned range, the electrode density tends to decrease and the energy density of the energy storage device decreases.

When a solid electrolyte or gel electrolyte is used as an electrolyte between the positive electrode and the negative electrode, the solid electrolyte is added to the mixture for an electrode having the conductive carbon or the conductive carbon mixture and the electrode active material particles to secure ion conduction paths in an active material layer, these are thoroughly mixed together with a solvent in which a binder is dissolved if needed, and the resulting mixture is used to form the active material layer on the current collector.

Known binder such as polytetrafluoroethylene, polyvinylidene fluoride, tetrafluoroethylene-hexafluoropropylene copolymer, polyvinyl fluoride, and carboxymethylcellulose are used as the binder that are mixed with the active material particles and the conductive carbon or the conductive carbon mixture. The content of the binder is preferably 1 to 30 mass % of the total amount of mixed materials. If the content of the binder is less than 1 mass %, the strength of the active material layer is less than sufficient, and if the content of the binder is more than 30 mass %, inconveniences such as lower discharge capacity of the electrode and excessive internal resistance appear. As a solvent that is mixed with the active material particles and the conductive carbon or the conductive carbon mixture, a solvent that does not adversely affect other materials, such as N-methylpyrrolidone, can be used without limitation.

As a current collector that is used in the pressurizing process, a conductive material such as platinum, gold, nickel, aluminum, titanium, steel, and carbon can be used. The current collector can have any shape, such as film, foil, plate, mesh, expanded metal, or cylindrical.

As a variant embodiment, instead of mixing the different conductive carbon with the conductive carbon to obtain the conductive carbon mixture beforehand and then mixing it with the electrode active material particles, electrode active material particles, the conductive carbon, and the different conductive carbon can be mixed simultaneously to obtain a mixture for an electrode, which is then applied onto the current collector.

### EXAMPLES

The present invention is described by using the following examples, but the present invention is not limited to the following examples.

### (1) Charge/discharge cycle test

### Comparative Example 1

10 g of Ketjen black (trade name EC300J, Ketjen Black International, Inc.) was added to 300 mL of 40% nitric acid, the resulting solution was irradiated with ultrasound for 10 minutes, and filtered to collect Ketjen black. The retrieved Ketjen black was washed three times with water and dried to obtain acid-treated Ketjen black. 1.8 g of this acid-treated Ketjen black was mixed with 0.5 g of Fe(CH₃COO)₂, 0.19 g of Li(CH₃COO), 0.28 g of C₆H₈O₇ · H₂O, 0.33 g of CH₃COOH, 0.33 g of H₃PO₄, and 250 ml of distilled water. After stirring the mixed liquid for 1 hour by a stirrer, the mixed liquid obtained was evaporated and dried at 100 °C in air and the mixture was collected. The mixture was then introduced into a vibrating ball mill device and milled at 20 hz for 10 minutes. The milled powder was heated at 700 °C for 3 minutes in nitrogen to obtain a composite where LiFePO₄ was supported on the Ketjen black.

1 g of the resulting composite was added to 100 mL of an hydrochloric acid solution with a concentration of 30 %, and the LiFePO₄ in the composite was dissolved into the resulting solution while irradiated with ultrasonic waves for 15 minutes, and the remaining solid was filtered, washed with water, and dried. A portion of the dried solid was heated to 900 °C in air by TG analysis to determine weight loss. The abovementioned process of dissolving LiFePO₄ with the hydrochloric acid solution, filtration, washing with water, and drying was repeated until the weight loss was 100%, that is, no LiFePO₄ remained, and a LiFePO₄-free oxidized carbon was obtained.

Next, 0.1 g of the resulting oxidized carbon was added to 20 mL of an aqueous ammonia solution at pH 11 and ultrasonic irradiation was performed for 1 minute. The resulting solution was allowed to stand for 5 hours to get the solid phase to precipitate. After precipitation of the solid phase, the supernatant solution was removed and the remaining portion was dried, and the weight of the solid after drying was measured. The ratio of the wight of the initial weight 0.1 g of the oxidized carbon minus the weight of the solid after drying to the initial weight 0.1 g of the oxidized carbon was used as the content of the hydrophilic portion in the oxidized carbon. The hydrophilic portion content was 10.2% of the total oxidized carbon.

The oxidized carbon and acetylene black as a different conductive carbon were mixed in a 1:1 mass ratio to obtain a preliminary carbon mixture.

In addition, 97 parts by mass of commercially available LiNi_{0.5}Mn_{0.3}Co_{0.2}O₂ particles (average particle size 5 µm), 2 parts by mass of the above preliminary carbon mixture, and 1 part by mass of polyvinylidene fluoride were thoroughly mixed with an appropriate amount of N-methylpyrrolidone to form a slurry. This slurry was applied on an aluminum foil, dried, and then pressurized three times under 1.5 t/cm to obtain a positive electrode for a lithium-ion secondary battery.

93 parts by mass of graphite, 1 part by mass of acetylene black, and 6 parts by mass of polyvinylidene fluoride were thoroughly mixed with an appropriate amount of N-methylpyrrolidone to form a slurry. The slurry was applied on a copper foil, dried, and pressurized to obtain a negative electrode with an electrode density of 1.5 g/cc for a lithium-ion secondary battery. The ratio of positive electrode capacity to negative electrode capacity was 1:1.2.

After vacuum drying the resulting positive and negative electrodes at 80 °C for 12 hours, a lithium-ion secondary battery was prepared by using as an electrolytic solution a 1M LiPF₆ ethylene carbonate/dimethyl carbonate 1:1 solution that contains 1 wt % vinylene carbonate as an additive.

The resulting battery was subjected to a charge/discharge cycle test in the range of 4.5 V to 2.5 V under the conditions of 45 °C and 0.6 C charge/discharge rate.

### Example 1

The preliminary carbon mixture obtained in Comparative Example 1 was heat-treated at 200 °C for 4 hours in a nitrogen atmosphere electric furnace to obtain a conductive carbon mixture. A lithium-ion secondary battery was made by the same procedure as in Comparative Example 1 by using this conductive carbon mixture instead of the preliminary carbon mixture, and a charge/discharge cycle test was conducted on the resulting battery by the same procedure as in Comparative Example 1.

### Example 2

The preliminary carbon mixture obtained in Comparative Example 1 was heat-treated at 400°C for 4 hours in a nitrogen atmosphere electric furnace to obtain a conductive carbon mixture. A lithium-ion secondary battery was made by the same procedure as in Comparative Example 1 by using this conductive carbon mixture instead of the preliminary carbon mixture, and a charge/discharge cycle test was conducted on the resulting battery by the same procedure as in Comparative Example 1.

### Example 3

The preliminary carbon mixture obtained in Comparative Example 1 was heat-treated at 600°C for 1 hour in a nitrogen atmosphere electric furnace to obtain a conductive carbon mixture. A lithium-ion secondary battery was made by the same procedure as in Comparative Example 1 by using this conductive carbon mixture instead of the preliminary carbon mixture, and a charge/discharge cycle test was conducted on the resulting battery by the same procedure as in Comparative Example 1.

### Example 4

The preliminary carbon mixture obtained in Comparative Example 1 was heat-treated at 900°C for 4 hours in a nitrogen atmosphere electric furnace to obtain a conductive carbon mixture. A lithium-ion secondary battery was made by the same procedure as in Comparative Example 1 by using this conductive carbon mixture instead of the preliminary carbon mixture, and a charge/discharge cycle test was conducted on the resulting battery by the same procedure as in Comparative Example 1.

### Comparative Example 2

A lithium-ion secondary battery was prepared by the same procedure as in Comparative Example 1 by using acetylene black instead of the preliminary carbon mixture, and the resulting battery was subjected to a charge/discharge cycle test by the same procedure as in Comparative Example 1.

Figure 1 shows the results of charge/discharge cycle tests for the batteries in Comparative Examples 1 and 2, and Figure 2 shows the results of charge/discharge cycle tests for the batteries in Examples 1 to 4 and Comparative Example 2. As shown in Figure 1, the battery in Comparative Example 1 had a higher capacity retention rate than the battery in Comparative Example 2 up to 25 charge/discharge cycles, but after about 30 charge/discharge cycles, the capacity retention rate of the battery in Comparative Example 1 became equivalent to that of the battery in Comparative Example 2, and after about 60 charge/discharge cycles, the capacity retention rate of the battery in Comparative Example 1 was rather lower than that of the battery in Comparative Example 2. On the other hand, the batteries in Examples 1 to 4, which used the conductive carbon mixtures obtained by adding heat treatment to the preliminary carbon mixture, showed improved charge/discharge cycle stability, as shown in Figure 2.

### (2) Investigation of the effects of heat treatment

To investigate the effects of heat treatment, the preliminary carbon mixture obtained in Comparative Example 1 was heat treated in a nitrogen atmosphere electric furnace at 200 °C for 4 hours, 250 °C for 4 hours, 300 °C for 4 hours, 400 °C for 4 hours, 500 °C for 4 hours, 600 °C for 1 hour, and 900 °C for 1 hour, respectively, and a conductive carbon mixture was obtained. For 30mg of each of the resulting conductive carbon mixtures and the preliminary carbon mixture which was not heat treated, an experiment was conducted using a TPD-PIMS device (TPD type R, manufactured by Rigaku Co., Ltd.) to measure the amount of CO₂ generated while heating under the conditions of helium atmosphere at atmospheric pressure (helium flow rate 300 mL/min), a temperature range of room temperature to 1200 °C, and a temperature increase rate of 20 °C/minute.

Figure 3 shows the results of the measurement. As shown in Figure 2, the improved charge/discharge cycle stability was obtained even with the heat treatment at 200°C. However, as is clear from Figure 3, the amount of CO₂ generated from the conductive carbon mixture in the range of 25 to 200°C varied significantly with the heat treatment at 200°C. It is known that CO₂ generation from carbon in the range of 25 to 200 °C is mainly due to desorption from surface carboxyl groups (see Non-patent Document 1), but the amount of CO₂ generation in the range of 25 to 200°C was almost the same in the conductive carbon mixtures that were heat treated at 250 to 400°C, which suggests that the desorption from the carboxyl groups on the surface was almost completed at the heat treatment at 250°C. Considering the results of this experiment and the results of the charge/discharge cycle test, it was determined that a method of identifying conductive carbon focusing on CO₂ generation in the range of 25 to 200°C would be useful to obtain improved charge/discharge cycle stability when high voltage is applied. Table 1 shows the results of calculating the ratio (mass %) of the total amount (integral value) of CO₂ generated from each of the conductive carbon mixtures and the preliminary carbon mixture in the temperature range of 25 to 200°C to the mass of the object being measured (30 mg).

**Table 1**

| | heat treatment temperature (°C) | CO₂ generation (mass %) |
|---|---|---|
| preliminary carbon mixture | - | 0.084 |
| conductive carbon mixture | 200 | 0.070 |
| conductive carbon mixture | 250 | 0.027 |
| conductive carbon mixture | 300 | 0.030 |
| conductive carbon mixture | 400 | 0.031 |
| conductive carbon mixture | 500 | 0.018 |
| conductive carbon mixture | 600 | 0.019 |
| conductive carbon mixture | 900 | 0.017 |

### (3) CO₂ generation from conductive carbon

The oxidized carbon obtained in Comparative Example 1 was heat treated at 200 °C for 4 hours, 400 °C for 4 hours, 600 °C for 1 hour, and 900 °C for 1 hour, respectively, in a nitrogen atmosphere electric furnace to obtain a conductive carbon. For 30mg of each of the conductive carbons and the oxidized carbon which was not heat treated, an experiment was conducted using a TPD-PIMS device (TPD type R, manufactured by Rigaku Co., Ltd.) to measure the amount of CO₂ generated while heating under the conditions of helium atmosphere at atmospheric pressure (helium flow rate 300 mL/min), a temperature range of room temperature to 1200 °C, and a temperature increase rate of 20 °C/minute. Table 2 shows the results of calculating the ratio (mass %) of the total amount (integral value) of CO₂ generated from each of the conductive carbons and the oxidized carbon in the temperature range of 25 to 200°C to the mass of the object being measured (30 mg).

**Table 2**

| | heat treatment temperature (°C) | CO₂ generation (mass %) |
|---|---|---|
| oxidized carbon | - | 0.137 |
| conductive carbon | 200 | 0.043 |
| conductive carbon | 400 | 0.019 |
| conductive carbon | 600 | 0.019 |
| conductive carbon | 900 | 0.016 |

It was determined from Table 2 that the stable charge/discharge cycle performance can be obtained even when high voltage is applied if the amount of CO₂ generated from the conductive carbon in the range of 25 to 200 °C is in the range of 0.015 to 0.050 mass % of the total conductive carbon.

### INDUSTRIAL APPLICABILITY

The use of the conductive carbon or the conductive carbon mixture produced by the present invention provides an energy storage device with high energy density and improved charge/discharge cycle stability even when high voltage is applied.

## Claims

1. A conductive carbon to be used as a conductive agent in an electrode of an energy storage device, wherein the conductive carbon has a property of spreading like paste when pressurized, and an amount of CO₂ generated from the conductive carbon in the range of 25 to 200 °C is within the range of 0.015 to 0.050 mass % of the entire conductive carbon.

2. A method for producing a conductive carbon to be used as a conductive agent in an electrode of a storage device, comprising:
an oxidation step, wherein a carbon raw material is subjected to oxidation treatment to obtain an oxidized carbon having a property of spreading like paste when pressurized; and
a heat treatment step, wherein the oxidized carbon is subjected to heat treatment in a vacuum or a non-oxidizing atmosphere to make an amount of CO₂ generated from a resulting conductive carbon in the range of 25 to 200 °C less than an amount of CO₂ generated from the oxidized carbon in the range of 25 to 200 °C.

3. The method of producing a conductive carbon according to Claim 2, wherein the heat treatment in the heat treatment step is performed in a manner that the amount of CO₂ generated from the resulting conductive carbon in the range of 25 to 200 °C is in the range of 0.015 to 0.050 mass % of the entire conductive carbon.

4. The method of producing a conductive carbon according to Claims 2 or 3, wherein the oxidation treatment in the oxidation step is performed so that a hydrophilic portion in the oxidized carbon obtained is 10 or more mass % of the total oxidized carbon.

5. A method of producing a conductive carbon mixture to be used as a conductive agent in an electrode of an electric storage device, comprising:
an oxidation step, wherein a carbon raw material is subjected to oxidation treatment to obtain an oxidized carbon having a property of spreading like paste when pressurized,
a mixing step, wherein the oxidized carbon is mixed with a different conductive carbon having a conductivity higher than that of the oxidized carbon to obtain a preliminary carbon mixture in which at least a part of the oxidized carbon spreads like paste to coat a surface of the different conductive carbon, and
a heat treatment step, wherein the preliminary carbon mixture is subjected to heat treatment in a vacuum or in a non-oxidizing atmosphere to make an amount of CO₂ generated from a resulting conductive carbon mixture in the range of 25 to 200 °C less than an amount of CO₂ generated from the preliminary carbon mixture in the range of 25 to 200 °C.

6. The method for producing a conductive carbon mixture according to Claim 5, the oxidation treatment in the oxidation step is performed so that a hydrophilic portion in the oxidized carbon obtained is 10 or more mass % of the total oxidized carbon.

7. A method of producing an electrode for an energy storage device, comprising:
a mixing process, wherein electrode active material particles and the conductive carbon obtained by the method according to any one of Claims 2 to 4 are mixed to obtain a mixture for an electrode in which at least a part of the conductive carbon spreads like paste to coat a surface of the electrode active material particles, and
a pressurizing process, wherein an active material layer is formed by applying the mixture for an electrode onto a current collector for the electrode, and pressure is applied to the active material layer obtained to further spread like paste and densify the conductive carbon.

8. A method of producing an electrode for an energy storage device, comprising:
a mixing process, wherein electrode active material particles and the conductive carbon mixture obtained by the method according to Claims 5 or 6 are mixed to obtain a mixture for an electrode in which a carbon that is derived from the oxidized carbon and at least a part of which spreads like paste coats not only a surface of the different conductive carbon but also a surface of the electrode active material particles, and
a pressurizing process, wherein an active material layer is formed by applying the mixture for an electrode onto a current collector for the electrode, and pressure is applied to the active material layer obtained to further spread like paste and densify the carbon which is derived from the oxidized carbon and at least a part of which spreads like paste.
